# EUROPÄISCHE PATENTANMELDUNG

(11) **EP 1 903 373 A1**
(43) Veröffentlichungstag der Anmeldung: **26.03.2008**
(21) Anmeldenummer: 07014614.7
(22) Anmeldetag: 25.07.2007
(51) Int. Cl.: G02C 11/02, G02C 11/00, G02C 5/14, G02C 5/00

(54) **Verkleideter Brillenbügel**

(30) Priorität: 21.09.2006 DE 102006044475
(71) Anmelder: Egger, Christoph, 6290 Mayrhofen (AT)
(72) Erfinder: Egger, Christoph, 6290 Mayrhofen (AT)
(74) Vertreter: Trossin, Hans-Jürgen

(57) **Zusammenfassung**

Ein Brillenbügel (34) mit einer im getragenen Zustand zum Kopf eines Brillenträgers hinweisenden Bügel-Kopfseite (20) und einer vom Kopf des Brillenträgers wegweisenden Bügel-Dekorseite umfasst einen Bügelkern (10) und eine an diesem vorgesehene und mit diesem verbundene Verkleidung (22), welche zumindest einen Abschnitt (14) der Bügel-Dekorseite bedeckt, wobei der Brillenbügel wenigstens einen elastischen Abdeckstreifen (28) umfasst, welcher wenigstens einen, vorzugsweise beide in Bügel-Längsrichtung (L) verlaufenden Ränder (24, 26) der Verkleidung (22) bedeckt.

## Beschreibung

Die vorliegende Erfindung betrifft einen Brillenbügel gemäß dem Oberbegriff des Anspruchs 1, welcher in einfacher Weise die Möglichkeit bietet, mit verschiedenen Oberflächenbeschaffenheiten ausgebildet zu werden. Die vorliegende Erfindung betrifft außerdem ein Verfahren zur Herstellung eines solchen Brillenbügels.

Brillenbügel sind grundsätzlich bekannt, um als Teil eines Brillengestells Brillengläser am Kopf des Brillenträgers zu halten. Die Brillenbügel sind in der Regel ein relativ zu den Brillengläsern verschwenkbarer Teil des die Brillengläser tragenden Brillengestells.

Gattungsgemäße Brillenbügel sind beispielsweise bekannt aus der US 5,321,442 A, DE 299 14 699-U, DE 37 15 259 A, DE 85 29 308 U, JP 2004-245927 A, DE 298 03 017 U oder DE 20 2005 016 538 U.

Wenn die Verkleidung an dem Bügelkern angebracht ist, kann es vorkommen, dass ein in Bügel-Längsrichtung verlaufender Rand der Verkleidung sich auf der Bügel-Kopfseite befindet. Dieser könnte bei längerer Tragezeit je nach Material der Verkleidung die Haut des Brillenträgers wundreiben oder zumindest ein unangenehmes Tragegefühl hervorrufen.

Aufgabe der vorliegenden Erfindung ist es daher, den gattungsgemäßen Brillenbügel so weiterzubilden, dass der zuvor genannte Nachteil des Standes der Technik überwunden ist.

Die genannte Aufgabe wird erfindungsgemäß dadurch gelöst, dass der Brillenbügel wenigstens einen elastischen Abdeckstreifen umfasst, welcher wenigstens einen, vorzugsweise alle in Bügel-Längsrichtung verlaufenden Ränder der Verkleidung bedeckt.

Ein in Bügel-Längsrichtung verlaufender Rand der Verkleidung im Sinne der vorliegenden Anmeldung liegt dann vor, wenn die Verlaufsrichtung des Randes wenigstens eine in Bügel-Längsrichtung verlaufende Komponente besitzt.

Sollte die Verkleidung den Bügelkern so weit umgeben, dass sie sich selbst überlappt, ist ein in Bügel-Längsrichtung verlaufender Rand der Verkleidung von der Verkleidung selbst bedeckt, so dass der wenigstens eine Abdeckstreifen nur noch einen auf der Bügel-Kopfseite freiliegenden Längsrand der Verkleidung zu bedecken braucht. Ein Längsrand kann grundsätzlich auch durch mehrere Teil-Längsrandabschnitte gebildet sein.

Um Material der Verkleidung zu sparen, kann jedoch daran gedacht sein, dass in Längsrichtung des Brillenbügels verlaufende Ränder der an dem Bügelkern vorgesehenen Verkleidung stoßartig aneinander anliegen oder mit einem Zwischenspalt einander gegenüberliegen. Der Zwischenspalt ist dabei vorteilhafterweise abmessungsmäßig kleiner als die Breite des Brillenbügels. In diesem Falle sollte der Abdeckstreifen zumindest abschnittsweise, vorzugsweise jedoch vollständig, derart bemessen sein, dass er beide Ränder der Verkleidung bedeckt, um beim Brillenträger ein unangenehmes Tragegefühl zu vermeiden.

In einer weniger bevorzugten Ausführungsform kann jedoch auch jedem in Bügel-Längsrichtung verlaufenden Rand ein gesonderter Abdeckstreifen zugeordnet sein.

Mit "getragenem Zustand" ist ein Zustand gemeint, in welchem der Brillenbügel an einer Brille angebracht und die Brille von einem Brillenträger getragen ist. Dann ist jene Brillenbügelseite, deren Normalenvektor eine zum Kopf des Brillenträgers hinweisende Komponente besitzt, die Bügel-Kopfseite und jene Brillenbügelseite, deren Normalenvektor eine Komponente vom Kopf des Brillenträgers weg aufweist, die Bügel-Dekorseite.

Da üblicherweise die Bügel-Dekorseite einem Dritten, der sich dem Brillenträger gegenübersieht, besonders ins Auge fällt, kommt es für die Wirkung des Brillenbügels vor allem auf die Oberflächenbeschaffenheit der Bügel-Dekorseite an. Daher bedeckt die an dem Bügelkern vorgesehene und mit diesem verbundene Verkleidung zumindest einen Abschnitt der Bügel-Dekorseite. Durch den oben beschriebenen Aufbau kann der Brillenbügel gebildet sein aus einem standardisierten Bügelkern, welcher für alle Brillenbügeltypen gleich ist, und einer vom Bügelkern gesonderten Verkleidung, welche individuell ausgebildet oder ausbildbar ist.

Die Verkleidung lässt sich besonders gut mit dem Bügelkern verbinden, wenn sie ihn längs einer zur Bügel-Längsrichtung im Wesentlichen orthogonalen Bügel-Umfangsrichtung um mehr als 180° umgibt. In diesem Falle könnte eine federnd ausgebildete formstabile Verkleidung auch formschlüssig an dem Bügelkern angebracht sein, etwa durch Aufklipsen.

Dann, wenn die Verkleidung einen Abschnitt der Bügel-Dekorseite um mehr als 180° umgibt, kann in diesem Abschnitt die Bügel-Dekorseite vollständig durch die Verkleidung gestaltet sein.

Obwohl es bei getragener Brille auf die Gestaltung der Bügel-Kopfseite nicht so sehr ankommt, kann eine besonders hohe Verliersicherheit der Verkleidung erreicht werden, wenn diese den Bügelkern in der Bügel-Umfangsrichtung im Wesentlichen vollständig umschließt.

Grundsätzlich kann die Verkleidung aus einem beliebigen, auch elastischen Material gebildet sein. Vorzugsweise umfasst die Verkleidung jedoch ein formlabiles Material, welches sich besonders zum Bedrucken oder sonstigen Gestalten eignet. Hierfür kommen beispielsweise Textilgewebe, Leder, Netzmaterial oder Kunststoffmaterial in Frage.

Um eine lange Benutzungsdauer des Brillenbügels zu ermöglichen, ist die Verkleidung mit dem Bügelkern vorzugsweise unlösbar verbunden. Dies kann durch alle möglichen Verbindungstechniken erfolgen, etwa auch durch Vernieten. Besonders einfach ist die Verkleidung jedoch mit dem Bügelkern verklebt, insbesondere flächig verklebt.

Aus Gründen einer möglichst einfachen Fertigung kann daran gedacht sein, dass die Verkleidung mit dem Bügelkern unter Zwischenanordnung eines Klebemittelträgers verklebt ist. Als Klebernittelträger kommt beispielsweise ein doppelseitig mit Klebemittel versehenes Material in Frage, wie etwa ein doppelseitiges Klebeband.

Der erfindungsgemäß vorgesehene Abdeckstreifen umfasst vorzugsweise ein Elastomer, wie etwa Gummi, insbesondere an seiner unmittelbar dem Kopf des Brillenträgers beim Tragen zugewandten Außenfläche, da ein Elastomer, und dabei insbesondere Gummi, eine hohe Standfestigkeit zeigt und gleichzeitig die Haut schont.

Um einen sicheren Klemmeingriff einer mit den erfindungsgemäßen Brillenbügeln ausgestatteten Brille am Kopf des Brillenträgers zu erreichen, kann an dem Abdeckstreifen auf seiner von der Verkleidung wegweisenden Seite eine Vorsprungsausbildung ausgebildet sein, welcher im getragenen Zustand zum Kopf des Brillenträgers hin vorsteht. Diese Vorsprungsausbildung kann vorteilhaft abgerundet sein, um nicht störend auf den Brillenträger zu wirken.

Der Klemmeingriff kann bei unterschiedlichsten Kopfformen sicher erreicht werden, wenn die Vorsprungsausbildung sich über einen in Längsrichtung des Brillenbügels verlaufenden Bereich des Abdeckstreifens erstreckt. Besonders vorteilhaft erstreckt sich die Vorsprungsausbildung über die gesamte Länge des Abdeckstreifens.

Gemäß einer vorteilhaften Weiterbildung der vorliegenden Erfindung kann der erfindungsgemäß vorgesehene elastische Abdeckstreifen als Informationsträger genutzt werden. Hierzu kann der Abdeckstreifen mit wenigstens einem Aufdruck oder wenigstens einer Einprägung versehen sein. Auf diese Art und Weise können an der Brille sehr einfach Informationen über den Hersteller oder/und den Herstellungsort oder/und die Herstellungsregion oder/und die Brillengröße und dergleichen vorgesehen sein.

Um größtmöglichen Tragekomfort zu gewährleisten, kann die Anbringung von Information auf dem Abdeckstreifen an einem bezüglich der oben beschriebenen Vorsprungsausbildung im getragenen Zustand vom Kopf des Brillenträgers weg zurückgesetzten Bereich erfolgen.

Eine weitere Verbesserung der Tragesicherheit einer mit den Brillenbügeln versehenen Brille kann dadurch erreicht werden, dass der Bügelkern an seinem brillenglasfernen Längsende eine Verdickung aufweist, an welche die Verkleidung in Bügel-Längsrichtung im Wesentlichen bündig anschließt.

Die oben genannte Aufgabe wird weiterhin gelöst durch ein Verfahren zur Herstellung eines Brillenbügels, welches die folgenden Schritte umfasst:
- Bereitstellen eines Bügelkerns, insbesondere durch Spritzgießen,
- Bereitstellen eines Materialflecks, insbesondere aus formlabilem Material,
- Aufbringen des Materialflecks auf eine Außenfläche des Bügelkerns,
- Aufbringen wenigstens eines elastischen Abdeckstreifens auf wenigstens einen Rand des Materialflecks.

Der Materialfleck kann dabei vorteilhafterweise vor dem Aufbringen auf den Bügelkern sehr einfach bearbeitet werden, etwa bedruckt werden. Auch der elastische Abdeckstreifen kann durch Kleben mit dem Bügelkern oder/und dem Material des Materialflecks verbunden werden.

Wie oben bereits dargelegt wurde, kann der Schritt des Aufbringens des Materialflecks ein Auftragen von Klebemittel auf den Bügelkern oder/und den Materialfleck selbst umfassen. Dies kann auch durch Aufbringen eines doppelseitigen mit Klebemittel versehenen Klebemittelträgers auf den Bügelkern oder/und den Materialfleck geschehen, so dass der Klebemittelträger eine Zwischenschicht zwischen dem Bügelkern und dem Materialfleck bildet. Dies bietet sich insbesondere dann an, wenn sich das Material des Materialflecks und das Material des Bügelkerns wechselseitig negativ beeinflussen.

Weiterhin kann das Verfahren ein Zuschneiden, insbesondere Laserzuschneiden, des Materialflecks umfassen, derart, dass an dem auf den Bügelkern aufgebrachten Materialfleck in Längsrichtung des Bügelkerns verlaufende Materialfleckränder stoßartig aneinander anliegen oder mit einem Zwischenspalt einander gegenüberliegen. Dieser Zuschneideschritt kann entweder vor oder nach dem Aufbringen des Materialflecks auf eine Außenfläche des Bügelkerns erfolgen. Im Falle eines vorhergehenden Zuschneidens kann der Materialfleck auch aus einer Materialbahn ausgestanzt werden.

Gemäß einer vorteilhaften Weiterbildung des erfindungsgemäßen Verfahrens kann dieses den Schritt eines Bedruckens des elastischen Abdeckstreifens oder/und den Schritt eines Prägens des elastischen Abdeckstreifens umfassen. Dadurch können in einfacher Weise Informationen über den Hersteller oder/und den Herstellungsort oder/und die Herstellungsregion oder/und die Brille selbst, wie etwa die Brillengröße oder/und verwendete Materialien oder/und hervorzuhebende Brilleneigenschaften, unverlierbar an der Brille vorgesehen werden.

Die vorliegende Erfindung wird im Folgenden anhand der beiliegenden Figuren näher erläutert. Es stellt dar:
- Fig. 1: eine Draufsicht eines Bügelkerns
- Fig. 2: eine Seitenansicht eines Materialflecks,
- Fig. 3: eine Seitenansicht der Bügel-Kopfseite des mit dem Materialfleck von Fig. 2 als Verkleidung versehenen Bügelkerns von Fig. 1,
- Fig. 4: eine Seitenansicht eines elastischen Abdeckstreifens und
- Fig. 5: eine Seitenansicht der Bügel-Kopfseite eines erfindungsgemäßen Bügels.

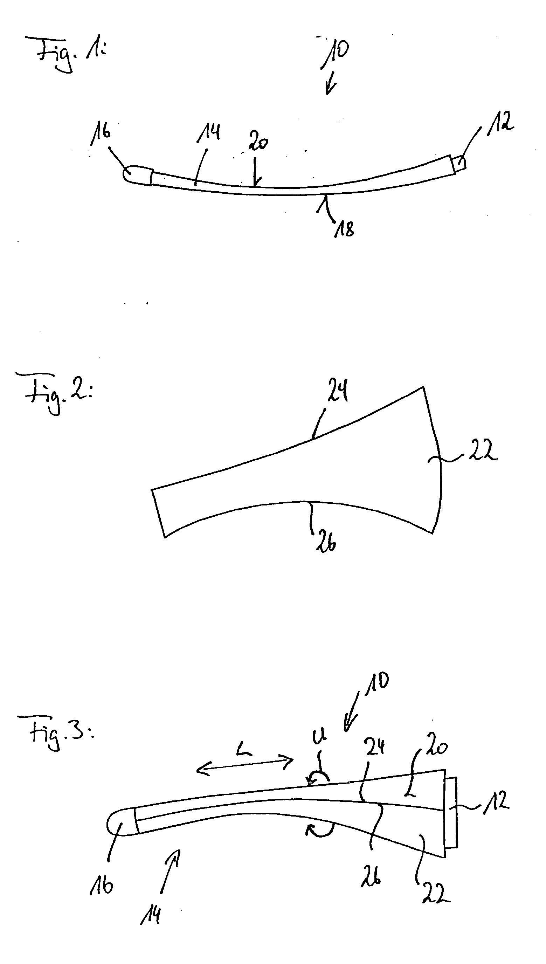

In Fig. 1 ist ein Bügelkern allgemein mit 10 bezeichnet. Der Bügelkern 10 ist in Draufsicht gezeichnet und umfasst ein brillenglasnahes Scharnier 12, einen mit diesem verbundenen Schaftabschnitt 14 und eine brillenglasferne Verdickung 16. Der Bügelkern 10 ist einstückig aus Kunststoff geformt. Er kann alternativ oder zusätzlich aus Metall gebildet sein.

Die in Fig. 1 untere Seite des Bügelkerns 10 wie auch des Brillenbügels weist im getragenen Zustand des Brillenbügels, d.h. wenn der Brillenbügel an einer Brille angebracht und die Brille Von einem Brillenträger getragen ist, vom Kopf des Brillenträgers weg. Sie stellt daher die Bügel-Dekorseite 18 dar. Die entgegengesetzte Seite des Bügelkerns 10 weist dagegen im getragenen Zustand zum Kopf des Brillenträgers hin und stellt daher die Bügel-Kopfseite 20 dar.

Zwischen dem Schaftabschnitt 14 und der Verdickung 16 ist eine umlaufende Stufe gebildet, welche in ihrer radialen Abmessung ungefähr der Dicke der am Bügelkern 10 anzubringenden Verkleidung entspricht.

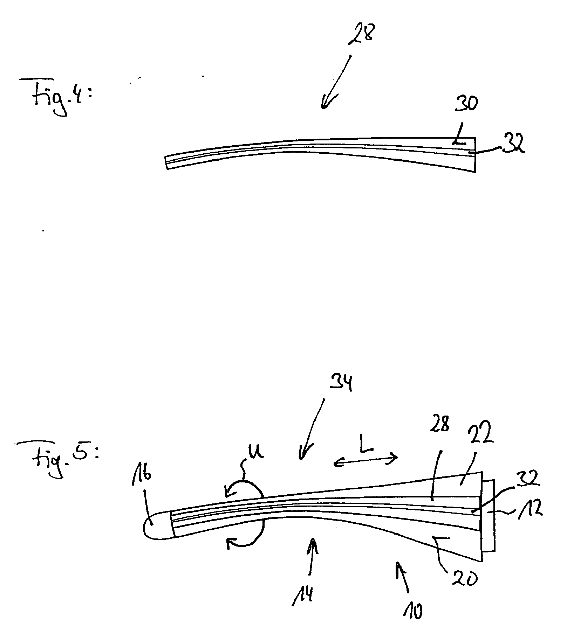

In Fig. 2 ist ein Materialfleck 22 aus bedrucktem Textilgewebe gezeigt. Der Materialfleck 22 ist bereits in seine Form zugeschnitten, in welcher er den Schaftabschnitt 14 des Bügelkerns 10 umgebend an den Bügelkern 10 passt. Dabei sind seine Längsränder 24 und 26 so zugeschnitten, dass sie dann, wenn der Materialfleck 22 als Verkleidung um den Schaftabschnitt 14 des Bügelkerns 10 herumgewickelt ist, stoßartig aneinander anliegen (s. Fig. 3).

In Fig. 3 erkennt man, dass der Materialfleck 22 im Wesentlichen die gesamte Länge des Schaftabschnitts 14 bedeckt, und zwar längs der Bügel-Längsrichtung L sowie in Bügel-Umfangsrichtung U. Das Scharnier 12 am einen Längsende des Bügelkerns 10 sowie die Verdickung 16 am entgegengesetzten Längsende bleiben unverkleidet.

Der Materialfleck 22 ist flächig mit dem Schaftabschnitt 14 des Bügelkerns 10 verklebt. Gegebenenfalls-kann zwischen dem Schaftabschnitt 14 und dem Materialfleck 22 ein Klebemittelträger als Zwischenlage angeordnet sein, welche als Haftvermittler zwischen dem Werkstoff des Bügelkerns 10 einerseits und dem textilen Gewebe des Materialflecks 22 andererseits dient.

Der durch die Längsränder 24 und 26 des Materialflecks 22 gebildete Stoß in Fig. 3 kann möglicherweise beim Tragen einer mit dem erfindungsgemäßen Brillenbügel versehenen Brille dem Träger ein irritierendes Gefühl verleihen und sogar bei längerer Tragezeit scheuern. Dies ist insbesondere dadurch verstärkt, dass Schnittränder von Textilgeweben sich verstärkt mit Klebemittel vollsaugen und somit stark erhärten.

Zum Schutz des Brillenträgers kann ein in Fig. 4 gezeigter elastomerer Abdeckstreifen 28 an dem Brillenbügel vorgesehen sein. Der Abdeckstreifen ist aus Gummi gebildet und weist an seiner im getragenen Zustand zum Kopf des Brillenträgers hinweisenden freiliegenden Seite 30 eine sich über die gesamte Länge des Abdeckstreifens erstreckende Vorsprungsausbildung 32 auf. Diese Vorsprungsausbildung 32 kann im Querschnitt eine teil- oder halbelliptische oder teil- oder halbkreisförmige oder allgemein polygonale Umrandung aufweisen. Die polygonale Berandung ist jedoch weniger bevorzugt, da die dadurch entstehenden Kanten einen lokal hohen Druck auf den Kopf des Brillenträgers ausüben können.

In Fig. 5 ist der fertige Brillenbügel 34 gezeigt. Der Abdeckstreifen 28 ist dabei derart angebracht, dass er die Längsränder 24 und 26 des Materialflecks 22 im Wesentlichen.vollständig überdeckt.

Durch die Anbringung des Materialflecks 22 als Verkleidung kann der Brillenbügel 34 mit beliebigen Oberflächenbeschaffenheiten ausgebildet sein, ohne dass dessen grundsätzlicher konstruktiver Aufbau hierzu verändert zu werden braucht. So kann an ein und demselben Bügelkern 10 ein und derselbe Textilgewebetyp mit unterschiedlichem Design angebracht werden. Weiterhin kann der Materialfleck 22 nach Wunsch gewählt sein, etwa auch als Lederfleck oder Netzmaterialfleck, und kann stets mit der gleichen Art von Bügelkern 10 verbunden werden.

Im Rahmen der vorliegenden Erfindung kommt es dabei nicht auf die konkrete Gestaltung des Brillenbügels an, sondern vielmehr darauf, die Variabilität und Flexibilität seiner Gestaltung zu erhöhen.

## Patentansprüche

1. Brillenbügel (34) mit einer im getragenen Zustand zum Kopf eines Brillenträgers hinweisenden Bügel-Kopfseite (20) und einer vom Kopf des Brillenträgers wegweisenden Bügel-Dekorseite (18), umfassend einen Bügelkern (10) und eine an diesem vorgesehene und mit diesem verbundene Verkleidung (22), welche zumindest einen Abschnitt (14) der Bügel-Dekorseite (18) bedeckt,
**dadurch gekennzeichnet, dass** der Brillenbügel (34) wenigstens einen elastischen Abdeckstreifen (28) umfasst, welcher wenigstens einen, vorzugsweise beide in Bügel-Längsrichtung (L) verlaufenden Ränder (24, 26) der Verkleidung (22) bedeckt.

2. Brillenbügel (34) nach Anspruch 1,
**dadurch gekennzeichnet, dass** in Längsrichtung (L) des Brillenbügels (34) verlaufende Ränder (24, 26) der an dem Bügelkem (10) vorgesehenen Verkleidung (22) stoßartig aneinander-anliegen oder mit einem Zwischenspalt einander gegenüberliegen, wobei der wenigstens eine Abdeckstreifen (28) zumindest abschnittsweise, vorzugsweise vollständig, alle Ränder (24, 26) der Verkleidung (22) bedeckt.

3. Brillenbügel (34) nach Anspruch 1 oder 2,
**dadurch gekennzeichnet, dass** die Verkleidung (22) den Bügelkern (10) längs einer zur Bügel-Längsrichtung (L) im Wesentlichen orthogonalen Bügel-Umfangsrichtung (U) um mehr als 180° umgibt.

4. Brillenbügel (34) nach Anspruch 3,
**dadurch gekennzeichnet, dass** die Verkleidung (22) den Bügelkern (10) in der Bügel-Umfangsrichtung (U) im Wesentlichen vollständig umschließt.

5. Brillenbügel (34) nach einem der vorhergehenden Ansprüche,
**dadurch gekennzeichnet, dass** die Verkleidung (22) ein formlabiles, insbesondere bedrucktes, Material umfasst, wie etwa ein Textilgewebe, Leder, Netzmaterial oder Kunststoffmaterial.

6. Brillenbügel nach einem der vorhergehenden Ansprüche,
**dadurch gekennzeichnet, dass** die Verkleidung (22) mit dem Bügelkern (10) unlösbar verbunden ist, insbesondere durch Verkleben.

7. Brillenbügel nach Anspruch 6,
**dadurch gekennzeichnet, dass** die Verkleidung (22) mit dem Bügelkern (10) unter Zwischenanordnung eines Klebemittelträgers verklebt ist.

8. Brillenbügel nach einem der vorhergehenden Ansprüche,
**dadurch gekennzeichnet, dass** der wenigstens eine Abdeckstreifen (28) ein Elastomer umfasst, vorzugsweise Gummi.

9. Brillenbügel nach einem der vorhergehenden Ansprüche,
**dadurch gekennzeichnet, dass** an dem wenigstens einem Abdeckstreifen (28) auf seiner von der Verkleidung wegweisenden Seite (30) eine Vorsprungsausbildung (32) ausgebildet ist, welcher im getragenen Zustand zum Kopf des Brillenträgers hin vorsteht.

10. Brillenbügel nach Anspruch 9,
**dadurch gekennzeichnet, dass** die Vorsprungsausbildung (32) sich über einen in Längsrichtung (L) des Brillenbügels (34) verlaufenden Bereich des Abdeckstreifens (28), vorzugsweise über die gesamte Länge des Abdeckstreifens (28) erstreckt.

11. Brillenbügel nach einem der vorhergehenden Ansprüche,
**dadurch gekennzeichnet, dass** der Bügelkern (10) an seinem brillenglasfernen Längsende eine Verdickung (16) aufweist, an welche die Verkleidung (22) in Bügel-Längsrichtung (L) im Wesentlichen bündig anschließt.

12. Brillenbügel nach einem der vorhergehenden Ansprüche,
**dadurch gekennzeichnet, dass** der elastische Abdeckstreifen (28) mit einem Aufdruck oder/und einer Einprägung versehen ist und so als Informationsträger dient.

13. Verfahren zur Herstellung eines Brillenbügels, umfassend die folgenden Schritte:
- Bereitstellen eines Bügelkerns (10), insbesondere durch Spritzgießen,
- Bereitstellen eines Materialflecks (22), insbesondere aus formlabilem Material,
- Aufbringen des Materialflecks (22) auf eine Außenfläche des Bügelkerns (10),
- Aufbringen wenigstens eines elastischen Abdeckstreifens (28) auf wenigstens einen Rand (24, 26) des Materialflecks (22).

14. Verfahren nach Anspruch 13,
**dadurch gekennzeichnet, dass** der Schritt des Aufbringens des Materialflecks (22) ein Auftragen von Klebemittel auf den Bügelkern (10) oder/und den Materialfleck (22) umfasst.

15. Verfahren nach Anspruch 13 oder 14,
**dadurch gekennzeichnet, dass** das Auftragen von Klebemittel ein Aufbringen eines doppelseitig mit Klebemittel versehenen Klebemittelträgers auf den Bügelkern (10) oder/und den Materialfleck (22) umfasst.

16. Verfahren nach einem der Ansprüche 13 bis 15,
**dadurch gekennzeichnet, dass** es ein Zuschneiden des Materialflecks (22) umfasst, derart, dass an dem auf den Bügelkern (10) aufgebrachten Materialfleck (22) in Längsrichtung (L) des Bügelkerns (10) verlaufende Materialfleckränder (24, 26) stoßartig aneinander anliegen oder mit einem Zwischenspalt einander gegenüberliegen.

17. Verfahren nach einem der Ansprüche 13 bis 16,
**dadurch gekennzeichnet, dass** es ein Aufbringen eines Aufdrucks auf dem elastischen Abdeckstreifen (28) oder/und ein Aufbringen einer Einprägung in dem elastischen Abdeckstreifen (28) umfasst.
